# EUROPEAN PATENT SPECIFICATION

(11) **EP 1 840 419 B1**
(45) Date of publication and mention of the grant of the patent: **15.05.2013**
(21) Application number: 06425227.3
(22) Date of filing: 31.03.2006
(51) Int. Cl.: F16J 1/08, F16J 1/02, F02F 3/00

(54) **Piston with surface finishing**
Kolben mit Oberflächenendbearbeitung
Piston avec finissage de surface

(43) Date of publication of application: 03.10.2007
(73) Proprietor: Federal-Mogul Nürnberg GmbH, 90441 Nürnberg (DE)
(72) Inventor: Omar, Said, 25015 Desenzano del Garda, Brescia (IT)
(74) Representative: Marchitelli, Mauro

(56) References cited:
- WO-A-86/01272
- WO-A-2005/042953
- BE-A- 391 607
- FR-A- 2 334 894
- GB-A- 661 273
- GB-A- 752 329
- GB-A- 1 318 631
- US-A- 3 521 531
- US-A1- 2005 063 835
- PATENT ABSTRACTS OF JAPAN vol. 017, no. 544 (M-1489), 30 September 1993 (1993-09-30) & JP 05 149198 A (TOYODA MACH WORKS LTD), 15 June 1993 (1993-06-15)
- PATENT ABSTRACTS OF JAPAN vol. 017, no. 663 (C-1138), 8 December 1993 (1993-12-08) & JP 05 214563 A (AISIN SEIKI CO LTD), 24 August 1993 (1993-08-24)
- PATENT ABSTRACTS OF JAPAN vol. 016, no. 047 (M-1208), 6 February 1992 (1992-02-06) & JP 03 249360 A (AISIN SEIKI CO LTD), 7 November 1991 (1991-11-07)

## Description

The present invention relates to pistons for reciprocating machines, in particular for internal combustion engines or piston compressors.

Known pistons comprise a head and a cylindrical skirt in which is formed a hole for a pin that connects in articulated fashion the piston to the end of a connecting rod. In the part of the skirt adjacent to the head are obtained a plurality of annular grooves in which are housed respective elastic segments.

More specifically, the invention relates to a piston with a finish on the outer surface that allows to obtain a directional flow of lubrication and a greater concentration of lubricant in defined areas of the surface of the skirt.

The document W02005/042953 describes a piston for an internal combustion engine according to the preamble to claim 1, including a coating applied to the outer surface of the skirt. The coating has a plurality of recesses which retain the lubricant between the skirt and the inner wall of the cylinder. The arrangement of the recesses in the coating of the skirt produces a directional flow of the lubricant towards defined areas of the skirt, constituting areas of retention of the lubricant.

In a known solution, which has long been used by the Applicant, the skirt is provided on its outer surface with a micro-rifling similar to a micro-threading etched directly in the surface of the skirt, which extends on a helical path that covers the entire surface of the skirt. This micro-rifling is usually obtained by means of micro-turning. Said micro-rifling does not allow to create a directional flow of lubricant towards areas of retention of the lubricant on the surface of the skirt.

The features of the preamble of claim 1 are known from GB-A-1318631, which discloses a method for forming on the surface of an article, such as a cylinder liner or a piston, a plurality of sinusoidal grooves for retaining lubricant.

The object of the present invention is to provide a piston with a surface finish that has greater ability to create a directional flow of lubricant and to retain the lubricant in predetermined areas of the skirt.

According to the present invention, said object is achieved by a piston having the characteristics set out in claim 1.

The piston according to the present invention has a skirt with an outer surface provided with a surface finish consisting of micro-rifling etched directly in the metallic surface of the skirt and defining areas of retention of the lubricant towards which in use a greater concentration of lubricant is created than in other areas of the outer surface of the skirt by effect of a directional flow of lubricant.

The solution according to the present invention allows a greater lubrication in the applications where a coating applied with serigraphy process cannot be provided.

The solution according to the invention is more resistant to wear than the solutions with serigraphy coating. The serigraphy coating is subject to corrosion phenomena under the action of gas, oil, fuel, etc. and it is subject to a likelihood of partial detachment during operation.

The solution according to the invention enables to have greater lubrication in defined areas of the skirt without using a coating, which reduces the number of operations of the productive process.

Lastly, the present invention is more easily applicable to pistons of reduced dimensions.

The present invention shall now be described in detail with reference to the accompanying drawings, provided purely by way of non limiting example, in which:
- Figure 1 is a schematic lateral view of a piston according to the present invention,
- Figure 2 is a lateral view according to the arrow II of Figure 1,
- Figure 3 is a lateral view showing a variant of the piston of Figure 1,
- Figure 4 is a lateral view showing a second variant of the piston according to the present invention,
- Figure 5 is a lateral view showing a third variant of the piston according to the present invention, and
- Figures 6 through 9 are enlarged sections showing different profiles of the micro-rifling of the piston according to the present invention.

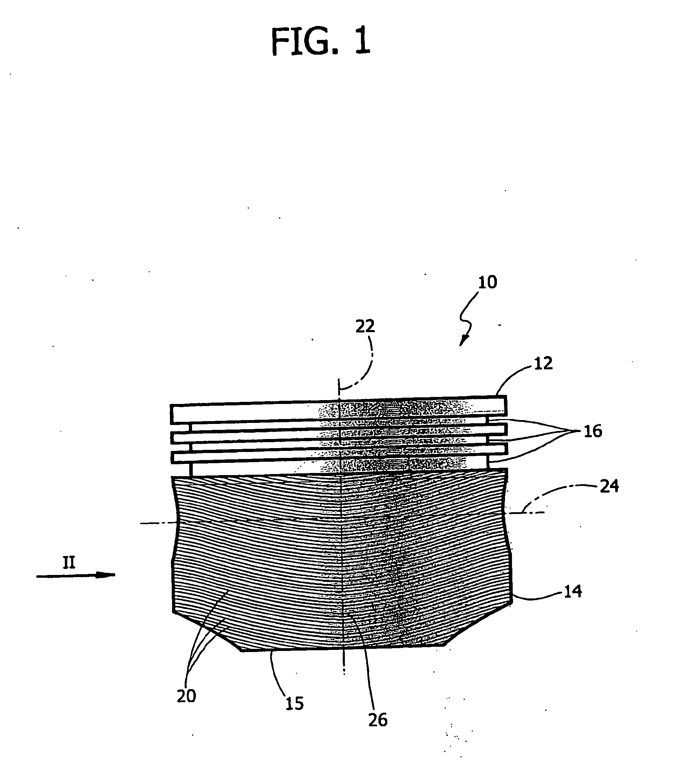

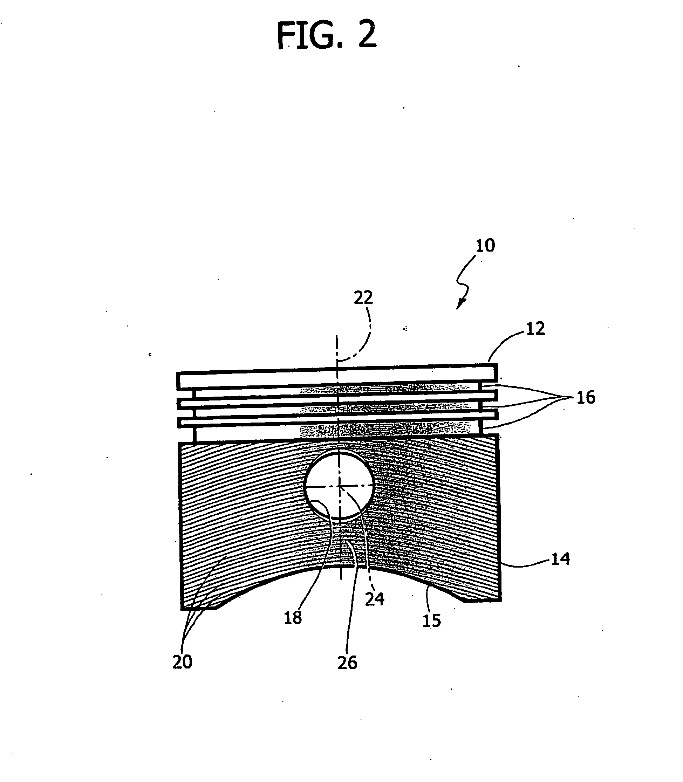

With reference to Figures 1 and 2, the reference number 10 designates a piston according to the present invention. The piston 10 comprises a metal body having a head 12 and a cylindrical skirt 14. In the part of the skirt 14 adjacent to the head 12 are obtained a plurality of annular grooves 16 able to receive respective elastic segments (not shown). The skirt 14 has a lower edge 15 opposite to the head 12.

In known fashion, in the skirt 14 is obtained a transverse hole 18 in which is housed a pin for articulating the piston 10 to a connecting rod.

The piston 10 according to the present invention is provided with a superficial finish on the outer surface of the skirt 14. The superficial finish of the skirt is constituted by micro-rifling 20 etched directly in the metallic surface of the skirt 14.

According to a first embodiment of the invention, the micro-riflings 20 have wave shape, preferably sinusoidal.

The axis of the sinusoidal profile of the micro-riflings 20 can be a cylindrical helix or a circumference. The period or pitch of the sinusoidal profile preferably has an extension that is equal to half the circumference of the skirt 14.

The micro-riflings 20 extend continuously along all or on part of the outer surface of the skirt 14.

The micro-riflings 20 can be formed by micro-turning in the case of micro-riflings with helical axis or by laser etching in the case of micro-riflings with circumferential axis.

In the embodiment shown in Figures 1 and 2, the micro-riflings 20 has two minimums situated in a plane passing through the longitudinal axis 22 of the piston 10 and orthogonal to the axis of the hole 18 (Figure 1). The maximums of the profile of the micro-riflings 20 are in a plane containing the longitudinal axis 22 of the piston 10 and the axis 24 of the hole 18 (Figure 2) .

The minimums and the maximums of the undulated profile of the micro-riflings 20 constitute lubricant retention zones. Two of said retention zones 26 are positioned on the thrust and counter-thrust plane of the piston, i.e. the plane passing through the longitudinal axis of the piston and orthogonal to the axis of the hole 18 of the pin. Since the pitch of the sinusoidal profile of the micro-riflings is half the circumference of the skirt 14, on the skirt 14 are provided in all four lubricant retention areas 26, positioned respectively in the thrust and counter-thrust plane (plane orthogonal to the axis 24 of the pin) and in the plane containing the axis 24 of the pin.

The sinusoidal wave shape of the micro-riflings 20 defines a directional path of the flow of lubricant which in operation remains between the outer surface of the skirt 12 and the inner wall of the cylinder in which the piston 10 slides. In use, a directional flow of lubricant is established towards the lubricant retention zones 26, so that in the retention zones 26 a greater concentration of lubricant is created than in other zones of the outer surface of the skirt 14.

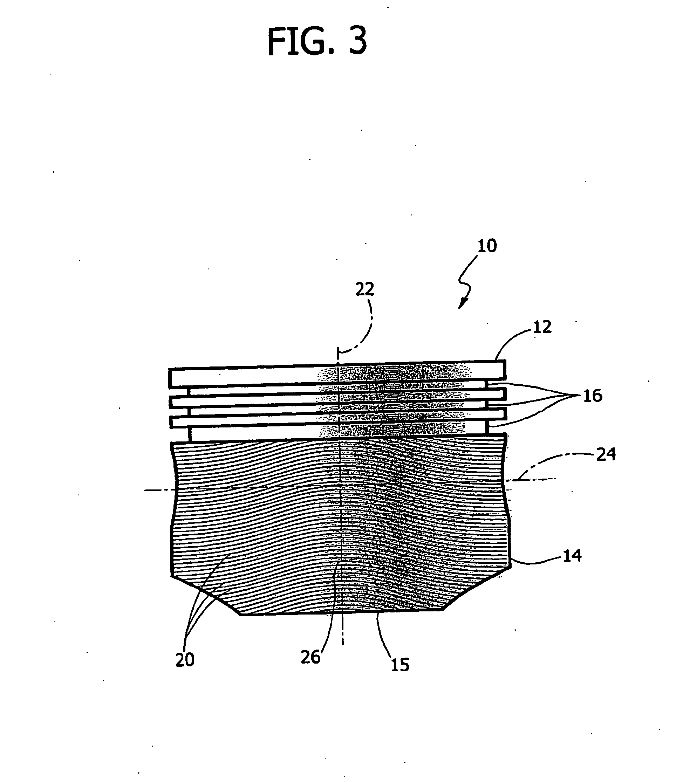

In the variant shown in Figure 3, the maximums of the profile of the micro-riflings 20 are situated in the plane passing through the longitudinal axis of the piston 10 and orthogonal to the axis 24 of the hole 18 (thrust and counter-thrust plane). In this case, the minimums of the profile of the micro-riflings 20 are in the plane passing through the longitudinal axis 22 of the piston 10 and through the axis 24 of the hole of the pin 18.

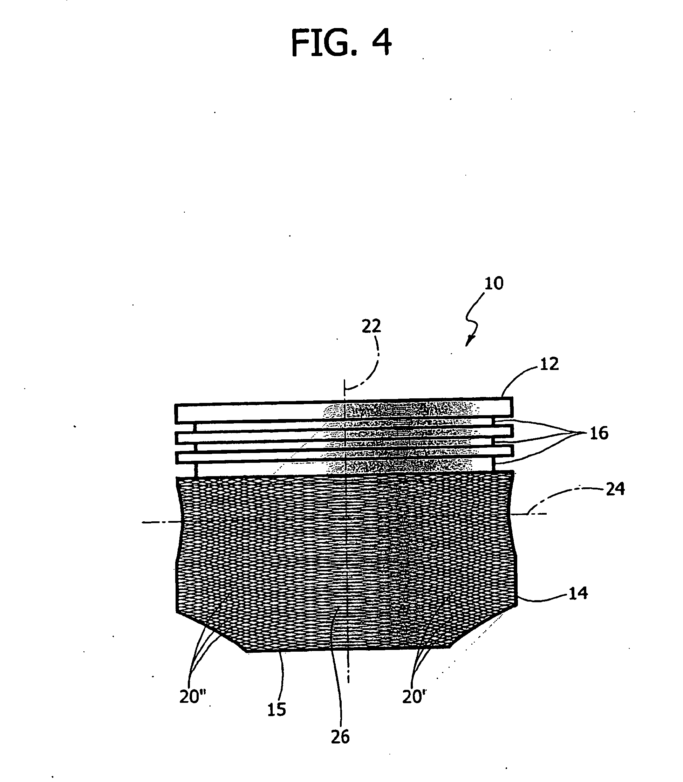

Figure 4 shows a second variant in which there are two series of micro-riflings 20', 20*"*. A first series of micro-riflings 20' has the minimums in the plane passing through the longitudinal axis 22 of the piston and orthogonal to the axis 24 of the hole 18. The second series of micro-riflings 20" has the maximums in this same plane. This means that the two series of micro-riflings 20', 20" are mutually offset in phase by 180°. In practice, the micro-rifling design of the variant of Figure 4 corresponds to the superposition of the micro-rifling designs of Figures 1 and 3.

Whilst in the variants illustrated in Figures 1 and 3 the micro-riflings never intersect, in the version of Figure 4 the outer surface of the skirt 14 has the shape of a grid given by the intersection of the two series of micro-riflings with mutually offset sinusoidal profiles.

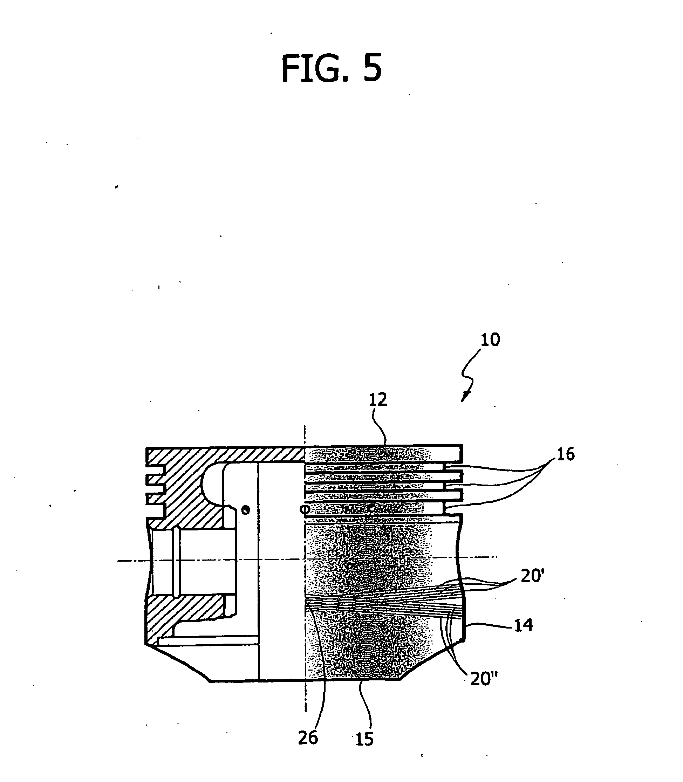

In the embodiment shown in Figure 5, the superficial finish of the skirt 14 consists of two series of micro-riflings 20', 20". In this case, the micro-riflings 20', 20" have linear shape instead of undulated shape. The axis of the micro-riflings 20', 20" can be helical or circular. The two series of micro-riflings 20', 20" are inclined with different angles on the surface of the skirt. The zones of intersection of the two series of micro-riflings 20', 20" define lubricant retention zones 26. By effect of the crossed angular profile of the two series of micro-riflings 20', 20" , in use the lubricant forms a directional flow towards the zones of intersection of the micro-riflings 20', 20". Preferably, the lubricant retention zones are positioned in the thrust and counter-thrust plane. In a complete revolution of the skirt, there can be different intersection zones, each of which forms a lubricant retention zone 26.

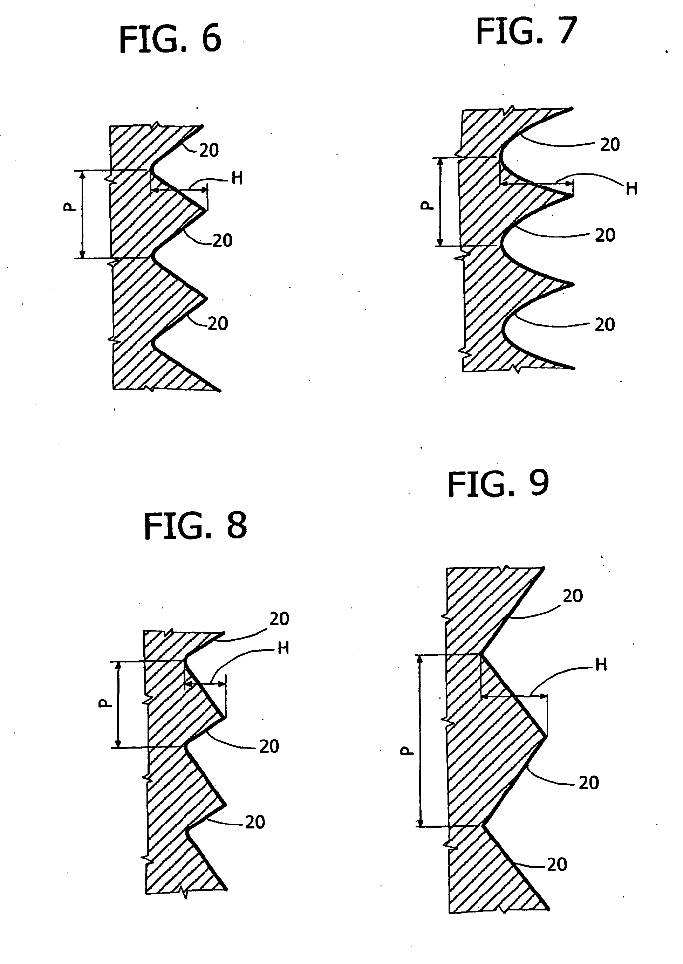

Figures 6 through 9 are enlarged schematic views showing possible profiles of the cross section of the micro-riflings 20. In the embodiment shown in Figure 6, the micro-riflings 20 have a depth H between 0.014 and 0.020 mm. The pitch between two adjacent micro-riflings P is between 0.25 and 0.35 mm. In the version of Figure 6, the micro-riflings 20 have the shape of an isosceles triangle with acute and rounded angle at the vertex.

In the variant shown in Figure 7, the micro-riflings 20 have substantially parabolic form with a depth H between 0.016 and 0.32 mm and a pitch P between 0.25 and 0.35 mm.

In the version of Figure 8, the micro-riflings 20 have the shape of an isosceles triangle with catheti of different amplitude. The depth P of the micro-riflings 20 is between 0.010 and 0.014 mm and the pitch P between the adjacent micro-riflings is between 0.25 and 0.35 mm.

In the version of Figure 9, the micro-riflings 20 have an isosceles triangular profile with obtuse angle at the vertex. The depth of the micro-riflings P is between 0.019 and 0.022 mm and the pitch is between 0.55 and 0.65 mm.

On the outer surface of the skirt 14, above the micro-riflings 20, a coating applied with serigraphy or plating techniques can be provided. Said coating, where present, extends on the surface of the micro-lining 20 but without filling them completely, in such a way that the micro-riflings 20 are also present in the zones where the coating is applied.

## Claims

1. A piston (10) able to perform a reciprocating movement in a cylinder of a reciprocating machine, comprising a metallic body having a head (12) and a cylindrical skirt (14) having an outer cylindrical surface, in which the outer surface of the skirt is provided with a superficial finish defining lubricant retention zones (26) in which in use a greater concentration of lubricant is created than in other zones of the outer surface of the skirt by effect of a directional flow of lubricant towards said lubricant retention zones (26), the superficial finish defining said lubricant retention zones (26) consisting of micro-riflings (20) etched directly in the metal surface of the skirt (14), said micro-riflings (20) extending along a sinusoidal profile having maximum and minimum zones forming said lubricant retention zones (26), **characterised in that** the sinusoidal profile of the micro-riflings (20) has a pitch equal to half the circumference of the skirt (14), the sinusoidal profile of the micro-riflings (20) has zones of maximum or minimum in a plane passing through the longitudinal axis (22) of the piston (10) and orthogonal to the axis (24) of a hole (18) for a pin articulating the piston (10) to a connecting rod.

2. Piston as claimed in claim 1, **characterised in that** the axis of the sinusoidal profile of the micro-riflings (20) extends along a helical path.

3. Piston as claimed in claim 1, **characterised in that** the axis of the sinusoidal profile of the micro-riflings (20) extends along a circular path.

4. Piston as claimed in claim 1, **characterised in that** the micro-riflings (20) extend parallel to each other without intersections.

5. Piston as claimed in claim 1, **characterised in that** the superficial finish comprises a first and a second series of sinusoidal, mutually offset micro-riflings (20', 20") which originate on the outer surface of the skirt (14) a grid of mutually crossed micro-riflings.

6. Piston as claimed in claim 1, **characterised in that** the superficial finish comprises a first and a second series of helical or cylindrical micro-riflings (20', 20"), mutually inclined and defining said lubricant retention zones (26) in the zones of mutual intersection.

7. Piston as claimed in any of the previous claims, **characterised in that** the micro-riflings (20) are obtained by micro-turning.

8. Piston as claimed in any of the claims from 1 to 6, **characterised in that** the micro-riflings (20) are obtained by laser etching.

## Patentansprüche

1. Kolben (10), welcher geeignet ist eine Kolbenbewegung in einem Zylinder einer Kolbenmaschine auszuführen, aufweisend einen metallischen Körper, welcher einen Kopf (12) und einen zylindrischen Schaft (14) aufweist, wobei letzterer eine äußere zylindrische Oberfläche aufweist, wobei die äußere Oberfläche mit einer Oberflächenendbehandlung versehen ist, welche Schmierstoffspeicherbereiche (26) definiert, in welchen im Gebrauch eine größere Konzentration an Schmierstoff erzeugt wird als in anderen Bereichen der äußeren Oberfläche des Schaftes durch den Effekt eines gerichteten Flusses von Schmierstoff zu den Schmierstoffspeicherbereichen (26), wobei die Oberflächenendbehandlung die Schmierstoffspeicherbereiche (26) definiert, welche aus Mikrorillen (20) bestehen, die direkt in die Metalloberfläche des Schaftes (14) geätzt sind, wobei sich die Mikrorillen (20) entlang eines sinusförmigen Profils erstrecken, wobei das Profil Maximum- und Minimum-Zonen aufweist, welche die Schmierstoffspeicherbereiche (26) bilden,
**dadurch gekennzeichnet, dass**
das sinusförmige Profil der Mikrorillen (20) einen Abstand aufweist, welcher der Hälfte des Umfangs des Schaftes (14) entspricht, wobei das sinusförmige Profil von Mikrorillen (20) Maximum- oder Minimum-Zonen in einer Ebene aufweist, welche durch die Längsachse (22) des Kolbens (10) und senkrecht zu der Achse (24) eines Lochs (18) für einen Stift verläuft, wobei der Stift den Kolben (10) an einem Verbindungsstab gelenkig anbringt.

2. Kolben gemäß Anspruch 1, **dadurch gekennzeichnet, dass** sich die Achse des sinusförmigen Profils der Mikrorillen (20) entlang eines spiralförmigen Pfades erstreckt.

3. Kolben gemäß Anspruch 1, **dadurch gekennzeichnet, dass** sich die Achse des sinusförmigen Profils der Mikrorillen (20) entlang eines kreisförmigen Pfades erstreckt.

4. Kolben gemäß Anspruch 1, **dadurch gekennzeichnet, dass** sich die Mikrorillen (20) parallel zueinander ohne Überschneidungen erstrecken.

5. Kolben gemäß Anspruch 1, **dadurch gekennzeichnet, dass** die Oberflächenendbehandlung eine erste und eine zweite Reihe von sinusförmigen, zueinander versetzten Mikrorillen (20', 20") aufweist, welche auf der äußeren Oberfläche des Schaftes (14) ein Netz von sich gegenseitig überkreuzenden Mikrorillen bildet.

6. Kolben gemäß Anspruch 1, **dadurch gekennzeichnet, dass** die Oberflächenendbehandlung eine erste und eine zweite Reihe von spiralförmigen oder zylindrischen Mikrorillen (20', 20") aufweist, welche gegeneinander geneigt sind und die Schmierstoffspeicherbereiche (26) in den Bereichen der gegenseitigen Kreuzung definieren.

7. Kolben gemäß einem der vorangegangenen Ansprüche, **dadurch gekennzeichnet, dass** die Mikrorillen (20) durch Mikrodrehen erzeugt werden.

8. Kolben gemäß einem der Ansprüche 1 bis 6, **dadurch gekennzeichnet, dass** die Mikrorillen (20) durch Laserätzen erzeugt werden.

## Revendications

1. Piston (10) apte à effectuer un mouvement alternatif dans un cylindre d'une machine alternative, comprenant un corps métallique ayant une tête (12) et une jupe cylindrique (14) ayant une surface cylindrique externe, dans lequel la surface externe de la jupe est dotée d'un fini superficiel définissant des zones de rétention de lubrifiant (26) dans lesquelles, en utilisation, est créée une concentration plus importante de lubrifiant que dans d'autres zones de la surface externe de la jupe grâce à l'effet d'un flux directionnel de lubrifiant vers lesdites zones de rétention de lubrifiant (26), le fini superficiel définissant lesdites zones de rétention de lubrifiant (26) constituées de micro-rayures (20) gravées directement dans la surface métallique de la jupe (14), lesdites micro-rayures (20) s'étendant le long d'un profil sinusoïdal possédant des zones maximum et minimum formant lesdites zones de rétention de lubrifiant (26), **caractérisé en ce que** le profil sinusoïdal des micro-rayures (20) a un pas égal à la moitié de la circonférence de la jupe (14), le profil sinusoïdal des micro-rayures (20) possède des zones de maximum ou minimum dans un plan passant à travers l'axe longitudinal (22) du piston (10) et orthogonal à l'axe (24) d'un trou (18) pour un axe articulant le piston (10) sur une bielle de liaison.

2. Piston selon la revendication 1, **caractérisé en ce que** l'axe du profil sinusoïdal des micro-rayures (20) s'étend le long d'une trajectoire hélicoïdale.

3. Piston selon la revendication 1, **caractérisé en ce que** l'axe du profil sinusoïdal des micro-rayures (20) s'étend le long d'une trajectoire circulaire.

4. Piston selon la revendication 1, **caractérisé en ce que** les micro-rayures (20) s'étendent parallèlement les unes aux autres sans intersections.

5. Piston selon la revendication 1, **caractérisé en ce que** le fini superficiel comprend une première et seconde séries de micro-rayures sinusoïdales, mutuellement décalées (20', 20") qui donnent naissance sur la surface externe de la jupe (14) à une grille de micro-rayures entrecroisées.

6. Piston selon la revendication 1, **caractérisé en ce que** le fini superficiel comprend une première et une seconde séries de micro-rayures hélicoïdales ou cylindriques (20', 20"), mutuellement inclinées et définissant lesdites zones de rétention de lubrifiant (26) dans les zones d'intersection mutuelle.

7. Piston selon l'une quelconque des revendications précédentes, **caractérisé en ce que** les micro-rayures (20) sont obtenues par micro-tournage.

8. Piston selon l'une quelconque des revendications de 1 à 6, **caractérisé en ce que** les micro-rayures (20) sont obtenues par gravure au laser.
